# FASCICULE DE BREVET EUROPEEN

(11) **EP 0 702 635 B1**
(45) Date de publication et mention de la délivrance du brevet: **18.12.1996**
(21) Numéro de dépôt: 94915593.1
(22) Date de dépôt: 06.05.1994
(51) Int. Cl.: B60T 13/52

(54) **SERVOMOTEUR A SOUFFLET POREUX FORMANT FILTRE**
SERVOMOTOR MIT EINEM ALS FILTER FUNGIERENDEN PORÖSEN SCHUTZBALG
BRAKE SERVO WITH A POROUS BELLOW FORMING A FILTER

(30) Priorité: 14.06.1993 FR 9307120
(43) Date de publication de la demande: 27.03.1996
(73) Titulaire: ALLIEDSIGNAL EUROPE SERVICES TECHNIQUES, 93700 Drancy (FR)
(72) Inventeur: GAUTIER, Jean-Pierre, F-93600 Aulnay-sous-Bois (FR); VEBRO, ULysse, F-93600 Aulnay-sous-Bois (FR); PEREZ REVILLA, Miguel, F-95100 Argenteuil (US)
(74) Mandataire: Bentz, Jean-Paul
(86) Numéro de dépôt international: FR9400534
(87) Numéro de publication internationale: WO9429151

(56) Documents cités:
- DE-A- 3 924 672
- DE-U- 9 015 412
- GB-A- 2 138 521

## Description

La présente invention concerne un servomoteur pneumatique de freinage utilisant des première et seconde sources de pression délivrant des première et seconde pressions respectives et différentes, ce servomoteur comprenant une enveloppe rigide séparée par au moins une cloison mobile étanche en au moins deux chambres dont la première est reliée à la première source et dont la seconde est susceptible d'être sélectivement reliée, au moyen d'un clapet, à l'une quelconque des deux sources, la cloison mobile étant susceptible d'être sollicitée par la différence entre les pressions établies dans les chambres pour entraîner un piston pneumatique essentiellement cylindrique coulissant de façon étanche dans l'enveloppe et logé, à l'extérieur de cette enveloppe, dans un soufflet de protection tubulaire dont une première extrémité est raccordée à l'enveloppe, ce piston portant d'une part le clapet et d'autre part un filtre d'épuration interposé entre la seconde source et ce clapet.

Des dispositifs de ce type, bien connus dans l'art antérieur, sont aujourd'hui utilisés sur un très grand nombre de véhicules à moteur.

Un exemple d'un tel dispositif est donné dans le document DE-A-3 924 672.

Malgré le caractère traditionnel des techniques concernées, les servomoteurs continuent de faire l'objet de recherches importantes, visant notamment à en réduire le coût, le temps de réponse à une sollicitation, et le niveau sonore en fonctionnement.

L'invention se situe dans ce contexte, et se propose précisément de contribuer à la réduction de l'un au moins de ces trois paramètres.

A cette fin, le servomoteur de l'invention est essentiellement caractérisé en ce que le soufflet protégeant le piston est au moins partiellement réalisé en un matériau poreux et déformable pour constituer lui-même le filtre d'épuration.

Grâce à cet arrangement, le filtre traditionnel peut en effet être supprimé, ce qui conduit à une réduction des coûts.

Par ailleurs, la surface du soufflet qui se trouve en contact avec la seconde source de pression (généralement l'atmosphère) est aisément bien supérieure, en raison de sa forme et de sa disposition, à la surface offerte par un filtre traditionnel, de sorte que le remplissage de la seconde chambre est beaucoup plus rapide et silencieux.

Selon un mode de réalisation préféré, le soufflet est au moins partiellement réalisé en un matériau élastomère poreux et sa seconde extrémité enserre la tige de commande qui sert à contrôler l'état du clapet.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue schématique en coupe d'un système de freinage à assistance pneumatique utilisant un servomoteur classique ; et
- la Figure 2 est une vue en coupe partielle d'un servomoteur conforme à l'invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A.

A cette fin, l'accès à la chambre arrière 3b est contrôlé par un clapet 7 et un plongeur 8, ce dernier étant relié une pédale de frein 9 par l'intermédiaire d'une tige de commande 10.

Lorsque la tige de commande 10 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11.

L'actionnement du plongeur 8 par un mouvement de la tige de commande 10 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique A.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 12 pour constituer une force d'actionnement transmise au maître-cylindre par l'intermédiaire d'une tige de poussée 13.

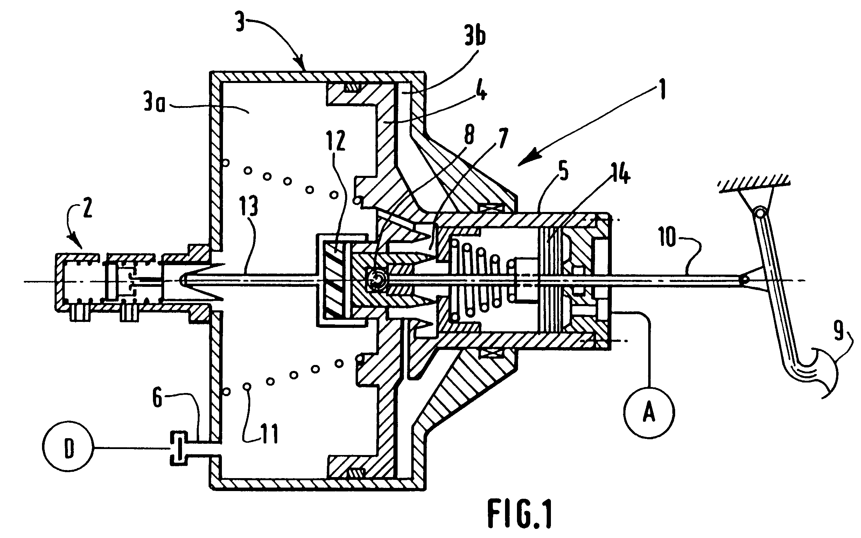

Comme le montre la Figure 1, le piston pneumatique 5 contient classiquement un filtre d'épuration 14, destiné à éviter toute pollution de la chambre arrière 3b par l'atmosphère A.

Par ailleurs, et bien que non visible sur le schéma de principe de la Figure 1, un soufflet de protection tubulaire, raccordé à l'enveloppe par une première de ses deux extrémités, entoure totalement la partie du piston 5 qui se trouve à l'extérieur de l'enveloppe 3.

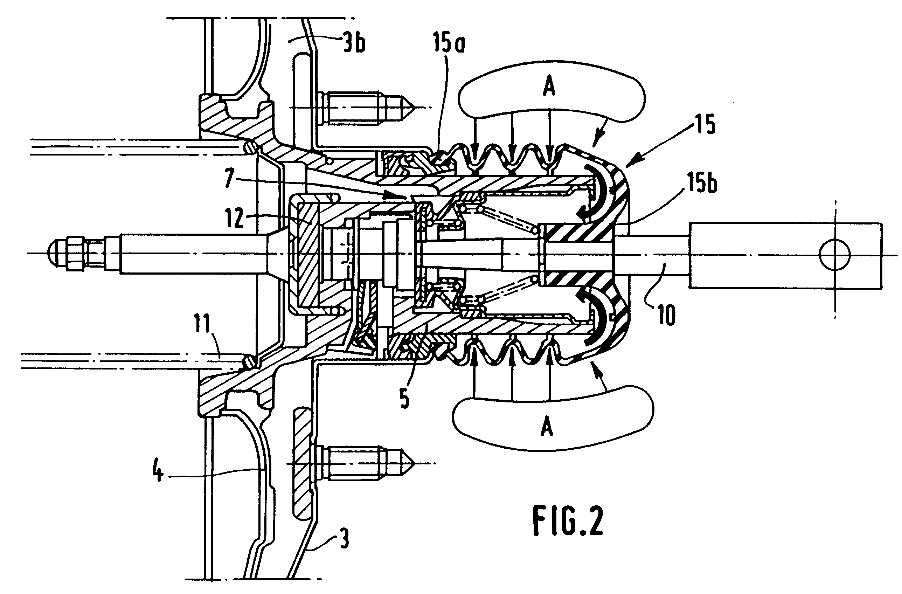

Selon l'invention, illustrée sur la Figure 2, ce soufflet 15 est au moins partiellement réalisé en un matériau poreux et déformable, de manière à constituer lui-même le filtre d'épuration.

En réalité, ce soufflet peut être composite ou homogène.

Dans le premier cas, il est par exemple réalisé par un gaine d'un matériau fibreux ou tissé quelconque, supportée par un ressort en spirale, accrochée à l'enveloppe 3 par sa première extrémité, et se refermant sur la tige de commande 10 au niveau de sa seconde extrémité.

Dans le second cas, qui correspond au mode de réalisation le plus simple et illustré par la Figure 2, le soufflet 15 prend la forme d'un tube au moins partiellement réalisé dans un matériau élastomère poreux, dont la première extrémité 15a s'accroche sur l'enveloppe 3, et dont la seconde extrémité 15b enserre la tige de commande 10.

## Revendications

1. Servomoteur pneumatique de freinage utilisant des première et seconde sources de pression (D, A) délivrant des première et seconde pressions respectives et différentes, ce servomoteur comprenant une enveloppe rigide (3) séparée par au moins une cloison mobile étanche (4) en au moins deux chambres (3a, 3b) dont la première (3a) est reliée à la première source (D) et dont la seconde (3b) est susceptible d'être sélectivement reliée, au moyen d'un clapet (7), à l'une quelconque des deux sources (D, A), la cloison mobile étant susceptible d'être sollicitée par la différence entre les pressions établies dans les chambres pour entraîner un piston pneumatique (5) essentiellement cylindrique coulissant de façon étanche dans l'enveloppe et logé, à l'extérieur de cette enveloppe, dans un soufflet de protection tubulaire (15) dont une première extrémité (15a) est raccordée à l'enveloppe (3), ce piston portant d'une part le clapet (7) et d'autre part un filtre d'épuration (14) interposé entre la seconde source et ce clapet, caractérisé en ce que le soufflet (15) est au moins partiellement réalisé en un matériau poreux et déformable, pour constituer lui-même le filtre d'épuration.

2. Servomoteur pneumatique suivant la revendication 1, dans lequel le clapet est commandé par une tige de commande (10), caractérisé en ce que la seconde extrémité (15b) du soufflet enserre la tige de commande.

3. Servomoteur pneumatique suivant la revendication 2, caractérisé en ce que le soufflet (15) est au moins partiellement réalisé dans un matériau élastomère poreux.

## Claims

1. Pneumatic brake booster using first and second sources of pressure (D, A) delivering first and second respective and different pressures, this booster comprising a rigid casing (3) separated by at least one sealed movable partition (4) into at least two chambers (3a, 3b) the first (3a) of which is connected to the first source (D) and the second (3b) of which is capable of being connected selectively by means of a valve (7) to either one of the two sources (D, A), the movable partition being capable of being forced by the difference in the pressures prevailing in the chambers to entrain an essentially cylindrical pneumatic piston (5) sliding in a sealed fashion in the casing and housed outside this casing in a tubular protective bellows (15) one first end (15a) of which is connected to the casing (3), this piston carrying, on the one hand, the valve (7) and, on the other hand, a purifying filter (14) interposed between the second source and this valve, characterized in that the bellows (15) is at least partially produced from a porous and deformable material in order itself to constitute the purifying filter.

2. Pneumatic booster according to claim 1, in which the valve is controlled by a control rod (10), characterized in that the second end (15b) of the bellows engages around the control rod.

3. Pneumatic booster according to claim 2, characterized in that the bellows (15) is at least partially produced from a porous elastomeric material.

## Patentansprüche

1. Pneumatischer Brems-Servomotor, der eine erste und eine zweite Unterdruckquelle (D, A) verwendet, die einen ersten bzw. einen zweiten, sich unterscheidenden Druck liefern, wobei dieser Servomotor ein starres Gehäuse (3) aufweist, das durch wenigstens eine dichte bewegbare Trennwand (4) in wenigstens zwei Kammern (3a, 3b) unterteilt ist, von denen die erste (3a) mit der ersten Quelle (D) verbunden ist und von denen die zweite (3b) über ein Ventil (7) selektiv mit einer beliebigen der beiden Quellen (D, A) verbunden werden kann, wobei die bewegbare Trennwand durch die Differenz zwischen den in den Kammern ausgebildeten Drücken beaufschlagt werden kann, um einen im wesentlichen zylindrischen Pneumatikkolben (5) anzutreiben, der in dichter Weise in dem Gehäuse gleitet und außerhalb dieses Gehäuses in einem rohrförmigen Schutzbalg (15) untergebracht ist, dessen erstes Ende (15a) mit dem Gehäuse (3) verbunden ist, wobei dieser Kolben zum einen das Ventil (7) und zum anderen einen Reinigungsfilter (14) aufweist, der zwischen der zweiten Quelle und diesem Ventil angeordnet ist, dadurch gekennzeichnet, daß der Balg (15) wenigstens teilweise aus einem porösen und verformbaren Material besteht, um selbst den Reinigungsfilter zu bilden.

2. Pneumatischer Servomotor nach Anspruch 1, bei dem das Ventil von einer Steuerstange (10) gesteuert wird, dadurch gekennzeichnet, daß das zweite Ende (15b) des Balgs die Steuerstange fest umschließt.

3. Pneumatischer Servomotor nach Anspruch 2, dadurch gekennzeichnet, daß der Balg (15) wenigstens teilweise aus einem porösen Elastomermaterial besteht.
